(19) Europäisches Patentamt
European Patent Office
Office européen des brevets

(11) **EP 4 387 316 A1**

(12) **EUROPEAN PATENT APPLICATION**
published in accordance with Art. 153(4) EPC

(43) Date of publication:
**19.06.2024  Bulletin 2024/25**

(21) Application number: **22866729.1**

(22) Date of filing: **08.09.2022**

(51) International Patent Classification (IPC):
**H04W 24/02** (2009.01)

(52) Cooperative Patent Classification (CPC):
**H04W 24/02; Y02D 30/70**

(86) International application number:
**PCT/CN2022/117930**

(87) International publication number:
**WO 2023/036268 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.09.2021  CN 202111063199**

(71) Applicant: **Huawei Technologies Co., Ltd.
Shenzhen, Guangdong 518129 (CN)**

(72) Inventors:
• **CHAI, Xiaomeng
  Shenzhen, Guangdong 518129 (CN)**
• **SUN, Yan
  Shenzhen, Guangdong 518129 (CN)**
• **WU, Yiqun
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND APPARATUS**

(57)    A communication method and apparatus are disclosed. The method includes: A terminal receives first information from a network device. The terminal determines N pieces of training data based on the first information, and N is an integer. The terminal performs model training based on the N pieces of training data, to obtain a first AI model. In the method and the apparatus in this application, the network device configures the first information used to determine the N pieces of training data for the terminal. The terminal performs model training based on the N pieces of training data autonomously. Therefore, the network device does not need to separately configure an AI model for the terminal. This reduces air interface overheads to some extent.

FIG. 6

## Description

## CROSS-REFERENCE TO RELATED APPLICATIONS

This application claims priority to Chinese Patent Application No. 202111063199.9, filed with the China National Intellectual Property Administration on September 10, 2021 and entitled "COMMUNICATION METHOD AND APPARATUS", which is incorporated herein by reference in its entirety.

## TECHNICAL FIELD

This application relates to the field of communication technologies, and in particular, to a communication method and apparatus.

## BACKGROUND

In a wireless communication network, for example, in a mobile communication network, increasingly diversified services are supported by the network. Therefore, increasingly diversified requirements need to be met. For example, the network needs to be capable of supporting an ultra-high rate, ultra-low latency, and/or a massive connection. These features make network planning, network configuration, and/or resource scheduling increasingly complex. In addition, because a function of the network is increasingly powerful, for example, a supported spectrum is increasingly high, and new technologies such as a high-order multiple-input multiple-output (multiple input multiple output, MIMO) technology, beamforming, and/or beam management are supported, network energy saving becomes a hot research topic. These new requirements, scenarios, and features bring an unprecedented challenge to network planning, operation and maintenance, and efficient operation. To meet this challenge, an artificial intelligence technology may be introduced into the wireless communication network, to implement network intelligence. Based on this, how to effectively implement artificial intelligence in the network is a problem worth studying.

## SUMMARY

This application provides a communication method and apparatus. A base station sends first information used to determine training data to a terminal. The terminal trains an AI model based on the training data autonomously. Therefore, the base station does not need to send the AI model to the terminal. This reduces network overheads to some extent.

According to a first aspect, a communication method is provided. The method is performed by a terminal, a component (a processor, a chip, or the like) disposed in the terminal, a software module, or the like, and the method includes: receiving first information from a network device, where the first information is used to determine N pieces of training data, and N is an integer; and performing model training based on the N pieces of training data, to obtain a first AI model.

According to the foregoing method, the terminal determines the N pieces of training data based on the first information from the network device, and performs model training based on the N pieces of training data, to obtain the first AI model. Therefore, the network device does not need to separately configure the AI model for the terminal. This reduces network overheads to some extent.

In a possible implementation, the first information indicates at least one of the following: at least one training set, where each training set includes at least one piece of training data; a second AI model, where the first AI model is obtained through training based on the second AI model, or the second AI model is used for training to obtain the first AI model; an input format and/or an output format of the first AI model; or performance requirement information of the first AI model.

According to the foregoing method, the network device configures, for the terminal, information such as the training set used for the model training, an initial AI model, an input format and an output format of a trained AI model, and a performance requirement of the trained AI model, so that the network device may perform management, control, and the like on the AI model used by the terminal.

In a possible implementation, the method further includes: receiving second information from the network device, where the second information indicates at least one of the following: training data included in the N pieces of training data in a first training set in the at least one training set; a value of N; or a ratio of training data obtained from different training sets in the at least one training set.

According to the foregoing method, in addition to configuring the training set used for the model training for the terminal, the network device may further configure, for the terminal, the training data used for the model training in the training set, to configure the training data for the terminal more accurately.

In a possible implementation, when there are a plurality of training sets and a plurality of first AI models, the first information further indicates a correspondence between the plurality of training sets and the plurality of first AI models.

In a possible implementation, the first information is a reference signal, and the method further includes: determining the N pieces of training data based on the reference signal.

According to the foregoing method, the network device may no longer separately configure the training data for the terminal, but uses the reference signal. The terminal may determine the N pieces of training data based on the reference signal, to reduce signaling overheads.

In a possible implementation, the method further includes: sending request information to the network device, where the request information requests the first information, or requests to perform model training, and the request information indicates at least one of the following: an application scenario of the first AI model; a function of the first AI model; a type of the training data; the input format and/or the output format of the first AI model; a computing capability of the terminal; or a storage capability of the terminal.

In a possible implementation, the method further includes: sending third information to the network device after the training of the first AI model is completed, where the third information indicates at least one of the following: an identifier of the first AI model; or performance of the first AI model.

According to the foregoing method, after completing the model training, the terminal may report information such as an identifier and performance of the trained AI model to the network device, so that the network device manages and controls the terminal.

According to a second aspect, a communication method is provided. The method is a method performed on a network device side corresponding to the method in the first aspect. For beneficial effects, refer to the first aspect. Details are not described again. The method is performed by a network device, a component (a processor, a chip, or the like) disposed in the network device, a software module, or the like, and the method includes: determining first information; and sending the first information to a terminal, where the first information is used to determine N pieces of training data that are used to train a first AI model, and N is an integer.

For description of the first information, refer to the first aspect. Details are not described again.

In a possible implementation, the method further includes: sending second information to the terminal device, where the second information indicates at least one of the following: training data included in the N pieces of training data in a first training set in the at least one training set; a value of N; or a ratio of training data obtained from different training sets in the at least one training set.

In a possible implementation, the method further includes: receiving request information from the terminal, where the request information requests the first information, or requests to perform model training, and the request information indicates at least one of the following: an application scenario of the first AI model; a function of the first AI model; a type of the training data; an input format and/or an output format of the first AI model; a computing capability of the terminal; or a storage capability of the terminal.

In a possible implementation, the method further includes: receiving third information from the terminal, where the third information indicates at least one of the following: an identifier of the first AI model; or performance of the first AI model.

According to a third aspect, an apparatus is provided. For beneficial effects, refer to the description of the first aspect. The apparatus may be a terminal, an apparatus configured in the terminal, or an apparatus that can be used in matching with the terminal. In a design, the apparatus includes units that are in one-to-one correspondence with the method/operations/steps/actions described in the first aspect. The units may be implemented by a hardware circuit, software, or a combination of a hardware circuit and software.

For example, the apparatus may include a processing unit and a communication unit, and the processing unit and the communication unit may perform corresponding functions in any design example of the first aspect. In a specific implementation,

the communication unit is configured to receive first information from a network device, where the first information is used to determine N pieces of training data, and N is an integer; and the processing unit is configured to perform model training based on the N pieces of training data, to obtain a first AI model.

For a specific execution process of the processing unit and the communication unit, refer to the first aspect. Details are not described herein again.

For example, the apparatus includes a processor, configured to implement the method described in the first aspect. The apparatus may further include a memory, configured to store instructions and/or data. The memory is coupled to the processor, and the processor may implement the method described in the first aspect when executing the program instructions stored in the memory. The apparatus may further include a communication interface, and the communication interface is used by the apparatus to communicate with another device. For example, the communication interface may be a transceiver, a circuit, a bus, a module, a pin, or another type of the communication interface, and the another device may be the network device. In a possible design, the apparatus includes:

a memory, configured to store program instructions; the communication interface, configured to receive the first information from the network device, where the first information is used to determine the N pieces of training data, and N is the integer; and the processor, configured to perform the model training based on the N pieces of training data, to obtain the first AI model.

For a specific execution process of the communication interface and the processor, refer to the description of the first aspect. Details are not described again.

According to a fourth aspect, an apparatus is provided. For beneficial effects, refer to the description of the second aspect. The apparatus may be a network device, an apparatus configured in the network device, or an apparatus that can be used in matching with the network device. In a design, the apparatus includes units that are in one-to-one correspondence with the method/operations/steps/actions described in the second aspect. The units may be implemented by a hardware circuit, software, or a combination of a hardware circuit and software.

For example, the apparatus may include a processing unit and a communication unit, and the processing unit and the communication unit may perform corresponding functions in any design example of the second aspect. In a specific implementation,

the processing unit is configured to determine first information, and
the communication unit is configured to send the first information to the terminal, where the first information is used to determine N pieces of training data that are used to train a first AI model, and N is an integer.

For a specific execution process of the processing unit and the communication unit, refer to the second aspect. Details are not described herein again.

For example, the apparatus includes a processor, configured to implement the method described in the second aspect. The apparatus may further include a memory, configured to store instructions and/or data. The memory is coupled to the processor, and the processor may implement the method described in the second aspect when executing the program instructions stored in the memory. The apparatus may further include a communication interface, and the communication interface is used by the apparatus to communicate with another device. For example, the communication interface may be a transceiver, a circuit, a bus, a module, a pin, or another type of the communication interface, and the another device may be the terminal. In a possible design, the apparatus includes:

a memory, configured to store program instructions;
the processor, configured to determine the first information;
the communication interface, configured to send the first information to the terminal, where the first information is used to determine the N pieces of training data that are used to train the first AI model, and N is the integer.

For a specific execution process of the communication interface and the processor, refer to the description of the second aspect. Details are not described again.

According to a fifth aspect, this application further provides a computer-readable storage medium, including instructions. When the instructions are run on a computer, the computer is enabled to perform the method in any aspect of the first aspect or the second aspect.

According to a sixth aspect, this application further provides a chip system. The chip system includes a processor, and may further include a memory, configured to implement the method in any one of the first aspect or the second aspect. The chip system may include a chip, or may include a chip and another discrete component.

According to a seventh aspect, this application further provides a computer program product, including instructions. When the instructions are run on a computer, the computer is enabled to perform the method in any aspect of the first aspect or the second aspect.

According to an eighth aspect, this application provides a system. The system includes the apparatus in the third aspect and the apparatus in the fourth aspect.

**BRIEF DESCRIPTION OF DRAWINGS**

FIG. 1 is a schematic diagram of a communication system according to this application;
FIG. 2 is a schematic diagram of a neuron according to this application;
FIG. 3 is a schematic diagram of a neural network according to this application;
FIG. 4 is a schematic diagram of an AI architecture according to this application;
FIG. 5a and FIG. 5b each are a schematic diagram of a network architecture according to this application;
FIG. 6 and FIG. 7 are flowcharts of communication methods according to this application; and
FIG. 8 and FIG. 9 are schematic diagrams of communication apparatuses according to this application.

**DESCRIPTION OF EMBODIMENTS**

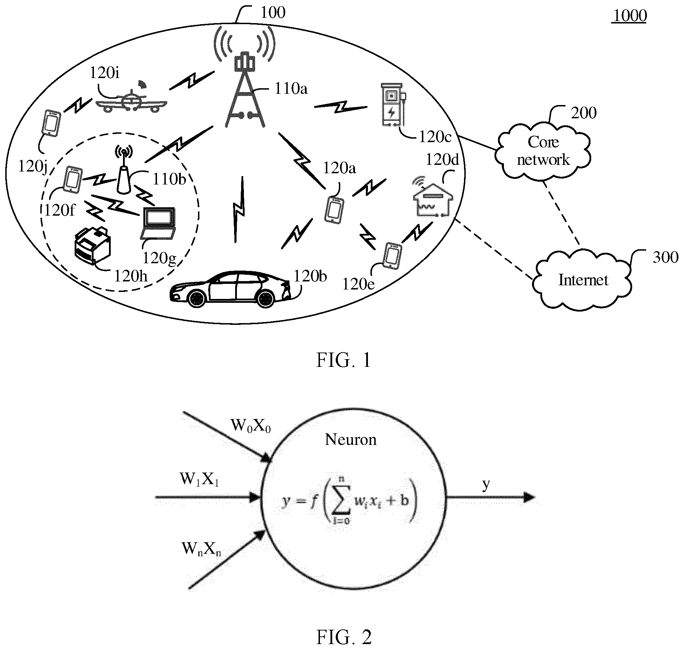

FIG. 1 is a schematic diagram of an architecture of a communication system 1000 to which this application is applicable. As shown in FIG. 1, the communication system includes a radio access network 100 and a core network 200. Optionally, the communication system 1000 may further include an internet 300. The radio access network 100 may include at least one access network device (for example, 110a and 110b in FIG. 1), and may further include at least one terminal (for example, 120a to 120j in FIG. 1). The terminal is connected to an access network device in a wireless manner, and the access network device is connected to the core network in a wireless or wired manner. A core network device and the access network device may be independent and different physical devices, a function of a core network device and a logical function of the access network device may be integrated into a same physical device, or some functions of a core network device and some functions of the access network device may be integrated into one physical device. A wired or wireless manner may be used for a connection between terminals and a connection between access network devices. FIG. 1 is only a schematic diagram. The communication system may further include another network device, for example, may further include a wireless relay device, a wireless backhaul device, and the like. This is not shown in FIG. 1.

The access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like. Alternatively, the access network device may be a module or unit that completes some functions of a base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station (for example, 110a in FIG. 1), may be a micro base station or an indoor base station (for example, 110b in FIG. 1), or may be a relay node or a donor node. A specific technology and a specific device form used by the access network device are not limited in this application.

In this application, an apparatus configured to implement a function of the access network device may be an access network device, or may be an apparatus that can support the access network device in implementing the function, for example, a chip system, a hardware circuit, a software module, or a combination of a hardware circuit and a software module. The apparatus may be installed in the access network device or may be used in a manner of matching the access network device. In this application, the chip system may include a chip, or may include a chip and another discrete component. For ease of description, the technical solutions provided in this application are described below by using an example in which the apparatus configured to implement the function of the access network device is the access network device and the access network device is a base station.

(1) Protocol layer structure

Communication between an access network device and a terminal complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the access network device and the terminal may further include an artificial intelligence (artificial intelligence, AI) layer, where the artificial intelligence layer is used for transmission of data related to an AI function.

(2) Central unit (central unit, CU) and distributed unit (distributed unit, DU)

An access device may include a CU and a DU. A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F 1-U. A specific name of each interface is not limited in this application. The CU and the DU may be classified based on a protocol layer of a wireless network. For example, functions of a PDCP layer and a protocol layer above the PDCP layer are configured in the CU, and functions of protocol layers below the PDCP layer (for example, an RLC layer, a MAC layer, and the like) are configured in the DU. For another example, a function of a protocol layer above a PDCP layer is configured in the CU, and functions of the PDCP layer and a protocol layer below the PDCP layer are configured in the DU. This is not limited.

The classification of processing functions of the CU and the DU based on the protocol layer is merely an example, and there may be other classification. For example, the CU or the DU may have functions of more protocol layers through classification. For another example, the CU or the DU may have some processing functions of the protocol layer through classification. In a design, some functions of the RLC layer and a function of a protocol layer above the RLC layer are configured in the CU, and a remaining function of the RLC layer and a function of a protocol layer below the RLC layer are configured in the DU. In another design, classification of functions of the CU or the DU may alternatively be performed based on a service type or another system requirement. For example, classification may be performed based on a latency. A function whose processing time needs to satisfy a latency requirement are configured in the DU, and a function whose processing time does not need to satisfy the latency requirement are configured in the CU. In another design, the CU may alternatively have one or more functions of a core network. For example, the CU may be disposed on a network side to facilitate centralized management. In another design, a radio unit (radio unit, RU) of the DU is disposed remotely. Optionally, the RU may have a radio frequency function.

Optionally, the DU and the RU may be classified at a physical layer (physical layer, PHY). For example, the DU may implement higher-layer functions of the PHY layer, and the RU may implement lower-layer functions of the PHY layer. For sending, functions of the PHY layer may include at least one of the following functions: cyclic redundancy check (cyclic redundancy check, CRC) code adding, channel coding, rate matching, scrambling, modulation, layer mapping, precoding, resource mapping, physical antenna mapping, and/or radio frequency sending. For receiving, functions of the PHY layer may include at least one of the following functions: CRC check, channel decoding, rate de-matching, descrambling, demodulation, layer de-mapping, channel detection, resource de-mapping, physical antenna de-mapping, and/or radio frequency receiving. The higher-layer functions of the PHY layer may include some functions of the PHY layer. For example, the some functions are closer to the MAC layer. The lower-layer functions of the PHY layer may include some other functions of the PHY layer. For example, the some other functions are closer to the radio frequency function. For example, the higher-layer functions of the PHY layer may include CRC code adding, channel coding, rate matching, scrambling, modulation, and layer mapping, and the lower-layer function of the PHY layer may include precoding, resource mapping, physical antenna mapping, and radio frequency sending functions. Alternatively, the higher-layer functions of the PHY layer may include CRC code adding, channel coding, rate matching, scrambling, modulation, layer mapping, and precoding, and the lower-layer functions of the PHY layer may include resource mapping, physical antenna mapping, and radio frequency sending functions. For example, the higher-layer functions of the PHY layer may include CRC check, channel decoding, rate de-matching, decoding, demodulation, and layer de-mapping, and the lower-layer functions of the PHY layer may include channel detection, resource de-mapping, physical antenna de-mapping, and radio frequency receiving functions. Alternatively, the higher-layer functions of the PHY layer may include CRC check, channel decoding, rate de-matching, decoding, demodulation, layer de-mapping, and channel detection, and the lower-layer functions of the PHY layer may include resource de-mapping, physical antenna de-mapping, and radio frequency receiving functions.

For example, a function of the CU may be implemented by one entity, or may be implemented by different entities. For example, the function of the CU may be further divided. In other words, a control plane and a user plane are separated and implemented by using different entities: a control plane CU entity (namely, a CU-CP entity) and a user plane CU entity (namely, a CU-UP entity). The CU-CP entity and the CU-UP entity may be coupled to the DU, to jointly complete a function of an access network device.

Optionally, any one of the DU, the CU, the CU-CP, the CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. These modules and methods performed by the modules also fall within the protection scope of this disclosure.

In a possible implementation, the access network device includes the CU-CP, the CU-UP, the DU, and the RU. For example, this application is executed by the DU, is executed by the DU and the RU, is executed by the CU-CP, the DU, and the RU, or is executed by the CU-UP, the DU, and the RU. This is not limited. Methods performed by the modules also fall within the protection scope of this application.

The terminal may also be referred to as a terminal device, user equipment (user equipment, UE), a mobile station, a mobile terminal, or the like. The terminal may be widely used in communication in various scenarios, for example, including but not limited to at least one of the following scenarios: a device-to-device (device-to-device, D2D) scenario, a vehicle-to-everything (vehicle-to-everything, V2X) scenario, a machine-type communication (machine-type communication, MTC) scenario, an internet of things (internet of things, IoT) scenario, a virtual reality scenario, an augmented reality scenario, an industrial control scenario, an automatic driving scenario, a telemedicine scenario, a smart grid scenario, a smart furniture scenario, a smart office scenario, a smart wearable scenario, a smart transportation scenario, a smart city scenario, or the like. The terminal may be a mobile phone, a tablet computer, a computer having a wireless transceiver function, a wearable device, a vehicle, an unmanned aerial vehicle, a helicopter, an airplane, a ship, a robot, a robot arm, a smart home device, or the like. A specific technology and a specific device form that are used by the terminal are not limited in this application.

In this application, an apparatus configured to implement a function of the terminal may be a terminal, or may be an apparatus that can support the terminal in implementing the function, for example, a chip system, a hardware circuit, a software module, or a combination of a hardware circuit and a software module. The apparatus may be installed in the terminal or may be used in a manner of matching the terminal. For ease of description, the technical solutions provided in this application are described below by using an example in which the apparatus configured to implement the function of the terminal is the terminal.

The base station and the terminal may be fixed or movable. The base station and/or the terminal may be deployed on the land, including an indoor device, an outdoor device, a handheld device, or a vehicle-mounted device, may be deployed on the water, or may be deployed on an airplane, a balloon, and an artificial satellite in the air. Application scenarios of the base station and the terminal are not limited in this application. The base station and the terminal may be deployed in a same scenario or different scenarios. For example, the base station and the terminal are both deployed on the land. Alternatively, the base station is deployed on the land, and the terminal is deployed on the water. Examples are not described one by one.

Roles of the base station and the terminal may be relative. For example, a helicopter or an unmanned aerial vehicle 120i in FIG. 1 may be configured as a mobile base station. For a terminal 120j that accesses the radio access network 100 via 120i, a terminal 120i is a base station. However, for a base station 110a, 120i is a terminal. In other words, 110a and 120i communicate with each other via a radio air interface protocol. 110a and 120i may alternatively communicate with each other via an interface protocol between base stations. In this case, 120i is also a base station relative to 110a. Therefore, both the base station and the terminal may be collectively referred to as communication apparatuses, 110a and 110b in FIG. 1 each may be referred to as a communication apparatus having a base station function, and 120a to 120j in FIG. 1 each may be referred to as a communication apparatus having a terminal function.

Communication between the base station and the terminal, between base stations, or between terminals may be performed by using a licensed spectrum, an unlicensed spectrum, both a licensed spectrum and an unlicensed spectrum, a spectrum below 6 gigahertz (gigahertz, GHz), a spectrum above 6 GHz, or both a spectrum below 6 GHz and a spectrum above 6 GHz. A spectrum resource used for wireless communication is not limited in this application.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal may establish a wireless connection to a cell controlled by the base station. The cell that establishes the wireless connection to the terminal is referred to as a serving cell of the terminal. When communicating with the serving cell, the terminal may be further interfered by a signal from a neighboring cell.

In this application, an independent network element (for example, referred to as an AI network element or an AI node) may be introduced into the communication system shown in FIG. 1, to implement an AI-related operation. The AI network element may be directly connected to the access network device in the communication system, or may be indirectly connected to the access network device via a third-party network element. The third-party network element may be a core network element such as an authentication management function (authentication management function, AMF) network element or a user plane function (user plane function, UPF) network element. Alternatively, an AI function, an AI module, or an AI entity may be configured in another network element in the communication system, to implement an AI-related operation. For example, the another network element may be an access network device (such as a gNB), a core network device, network management (operation, administration and maintenance, OAM), or the like. In this case, a network element that performs the AI-related operation is a network element equipped with a built-in AI function. In this application, an example in which another network element is equipped with a built-in AI function is used for description.

In this application, the OAM is configured to operate, manage, and/or maintain the core network device, and/or is configured to operate, manage, and/or maintain the access network device.

In this application, an AI model is a specific method for implementing the AI function, and the AI model represents a mapping relationship between an input and an output of the model. The AI model may be a neural network or another machine learning model. The AI model may be referred to as a model for short. The AI-related operation may include at least one of the following: data collection, model training, model information releasing, model inference (model inference), inference result releasing, or the like.

A neural network is used as an example. The neural network is a specific implementation form of a machine learning technology. According to the universal approximation theorem, the neural network can approximate any continuous function in theory, so that the neural network has a capability of learning any mapping. In a conventional communication system, a communication module needs to be designed with rich expert knowledge. However, a neural network-based deep learning communication system can automatically discover an implicit pattern structure from a large quantity of data sets, establish a mapping relationship between data, and obtain performance better than that of a conventional modeling method.

The idea of the neural network comes from a neuron structure of brain tissue. Each neuron performs a weighted summation operation on an input value of the neuron, and outputs a result of the weighted summation through an activation function. FIG. 2 is a schematic diagram of a neuron structure. It is assumed that an input of a neuron is $x = [x_0, x_1, \dots, x_n]$, a weight corresponding to each input is $w = [w, w_1, \dots, w_n]$, and an offset of weighted summation is b. An activation function may have diversified forms. It is assumed that an activation function of a neuron is $y = f(z) = \max(0, z)$. In this case, an output of the neuron is

$$y = f\left(\sum\nolimits_{i=0}^{i=n} w_i * x_i + \right.$$

$$b) = \max\left(0, \sum_{i=0}^{i=n} w_i * x_i + b\right)$$ . For another example, if an activation function of a neuron is y = f(z) = z, an output of the neuron is

$$y = f\left(\sum_{i=0}^{i=n} w_i * x_i + b\right) = \sum_{i=0}^{i=n} w_i * x_i + b$$ .

b may be any possible value such as a decimal, an integer (including 0, a positive integer, a negative integer, or the like), or a complex number. Activation functions of different neurons in the neural network may be the same or different.

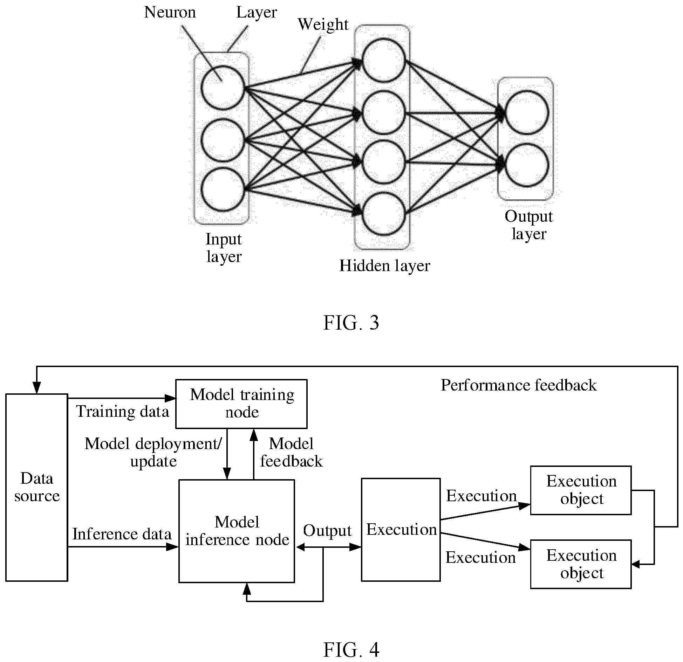

The neural network generally includes a multilayer structure, and each layer may include one or more neurons. Increasing a depth and/or a width of the neural network can improve an expression capability of the neural network, and provide more powerful information extraction and abstract modeling capabilities for a complex system. The depth of the neural network may indicate a quantity of layers included in the neural network, and a quantity of neurons included in each layer may be referred to as the width of the layer. FIG. 3 is a schematic diagram of a layer relationship of a neural network. In an implementation, the neural network includes an input layer and an output layer. The input layer of the neural network performs neuron processing on a received input, and then transfers a result to the output layer, and the output layer obtains an output result of the neural network. In another implementation, the neural network includes an input layer, a hidden layer, and an output layer. The input layer of the neural network performs neuron processing on a received input, and transfers a result to an intermediate hidden layer. The hidden layer then transfers a calculation result to the output layer or an adjacent hidden layer. Finally, the output layer obtains an output result of the neural network. One neural network may include one or more hidden layers that are sequentially connected. This is not limited. In a training process of the neural network, a loss function may be defined. The loss function describes a gap or a difference between an output value of the neural network and an ideal target value. A specific form of the loss function is not limited in this application. The training process of the neural network is a process of adjusting a neural network parameter, such as a quantity of layers and a width of the neural network, a weight of a neuron, a parameter in an activation function of the neuron, and/or the like, so that a value of the loss function is less than a threshold or meets a target requirement.

FIG. 4 is a schematic diagram of an application framework of AI. A data source (data source) is configured to store training data and inference data. A model training node (model training host) analyzes or trains training data (training data) provided by the data source, to obtain an AI model, and deploys the AI model in a model inference node (model inference host). Optionally, the model training node may further update the AI model deployed in the model inference node. The model inference node may further feed back related information about the deployed model to the model training node, so that the model training node performs optimization, updating, or the like on the deployed AI model.

The AI model represents a mapping relationship between an input and an output of the model. Obtaining an AI model through learning by the model training node is equivalent to obtaining the mapping relationship between the input and the output of the model through learning by the model training node by using the training data. The model inference node uses the AI model to perform inference based on inference data provided by the data source, to obtain an inference result. The method may also be described as that the model inference node inputs the inference data to the AI model, and obtains an output by using the AI model. The output is the inference result. The inference result may indicate a configuration parameter used (executed) by an execution object, and/or an operation performed by the execution object. The inference result may be uniformly planned by an execution (actor) entity, and sent to one or more execution objects (for example, network entities) for execution.

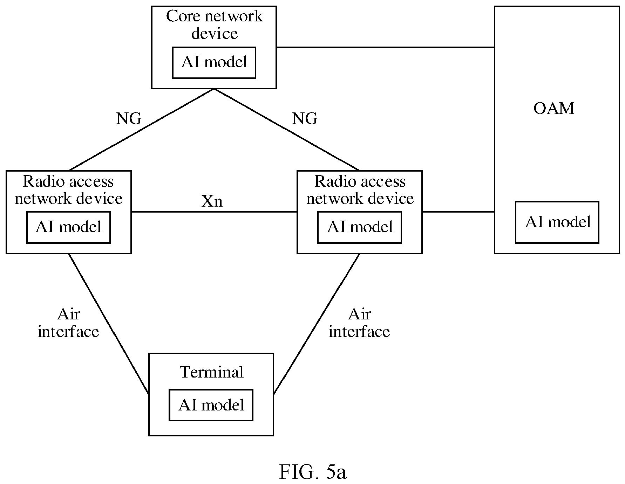

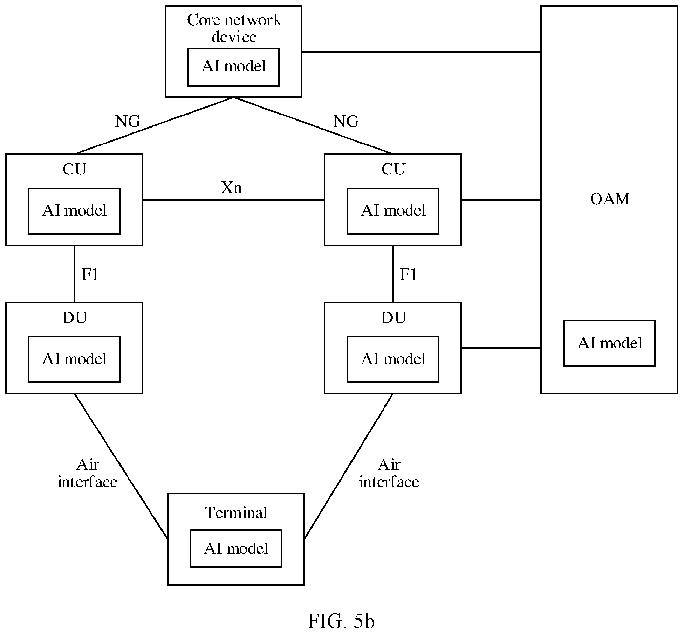

FIG. 5a and FIG. 5b each are a schematic diagram of a network architecture according to this application. An AI model may be deployed in at least one of a core network device, an access network device, a terminal, an OAM device, or the like, and a corresponding function is implemented by using the AI model. In this application, AI models deployed in different nodes are the same or different, and that the models are different includes at least one of the following differences. Structural parameters of the models are different. For example, quantities of layers and/or weights of the models are different; input parameters of the models are different; or output parameters of the models are different. That the input parameters of the models and/or the output parameters of the models are different may be further described as that functions of the models are different. Different from FIG. 5a, in FIG. 5b, functions of the access network device are split into a CU and a DU. Optionally, one or more AI models may be deployed in the CU, and/or one or more AI models may be deployed in the DU. Optionally, the CU in FIG. 5b may be further split into a CU-CP and a CU-UP. Optionally, one or more AI models may be deployed in the CU-CP, and/or one or more AI models may be deployed in the CU-UP. Optionally, in FIG. 5a or FIG. 5b, OAM of the access network device and OAM of the core network device may be separately deployed.

According to a communication method provided in this application, an AI model may be deployed in each device. For example, a first device sends, to a second device, first information used to determine N pieces of training data. The second device performs model training based on the N pieces of training data, to obtain the AI model. According to this method, the first device manages and controls the AI model deployed in the second device. The first device and the second device are not limited in this application. For example, the first device is a core network device, and the second device is an access network device. Alternatively, the first device is an access network device, and the second device is a terminal. Alternatively, the first device is a core network device, and the second device is a terminal. Alternatively, the first device is an OAM device, and the second device is a core network device, an access network device, a terminal, or the like. In subsequent specific descriptions, an example in which the first device is a base station, and the second device is the terminal is used for description. When the first device and the second device cannot directly communicate with each other, a third device may assist the first device and the second device in communicating with each other. For example, when the first device is the core network device or the OAM device, and the second device is the terminal, the first device may send a signal or information to the second device through forwarding by the third device (for example, the access network device), and the second device may also send a signal or information to the first device through forwarding by the third device. The forwarding may be transparent transmission or forwarding after processing (for example, adding a packet header, segmentation, or concatenation) a forwarded signal or forwarded information.

In a wireless network, AI model training and AI model deployment may be performed in different nodes. For example, the base station obtains the AI model through training, and then transmits the AI model to the terminal through an air interface. The terminal may perform a corresponding operation by using the AI model. There are two manners in which the AI model is transmitted through the air interface. One manner is to define the AI model in a protocol related to a wireless air interface, or define an interpretation format of the AI model. To be specific, the transmitted AI model may be encoded into a restorable information flow based on a predefined format, and transmitted to the terminal through the wireless air interface. The terminal restores the received information flow to the AI model based on the predefined format, and completes AI model transmission through the air interface. The other manner is to consider the AI model as an application layer data packet. In a wireless air interface protocol, the AI model or an interpretation format of the AI model does not need to be understood. The AI model is transmitted to the terminal through the air interface only as a common application layer data packet. The base station and the terminal encode and decode the AI model at an application layer, that is, the AI model or the interpretation format of the AI model is defined at a corresponding application layer.

In the foregoing solution, the AI model needs to be transmitted through the air interface. When the AI model is large, overheads of transmitting the AI model through the air interface are high. In addition, there are many types and formats of the AI model. For example, in macro classification, there are a multi-layer perceptron (multi-layer perceptron, MLP), a convolutional neural network (convolutional neural network, CNN), and a recurrent neural network (recurrent neural network, RNN). In micro classification, different AI models may have different quantities of neurons at each layer, connection relationships between neurons at each layer, connection relationships between layers, and types of activation functions. Regardless of the wireless air interface protocol or an application layer protocol, defining the AI model or the interpretation format of the AI model needs a large amount of standardization work. In addition, an AI technology still develops rapidly. Many new types and formats of the AI model are continuously proposed, and corresponding protocols need to be modified and supplemented frequently.

In addition, because computing capabilities of terminals vary greatly, scales of supported AI models vary. If all terminals download the AI model from the base station, the base station needs to train corresponding AI models for terminals having various computing capabilities. This causes high calculation and storage overheads for the base station.

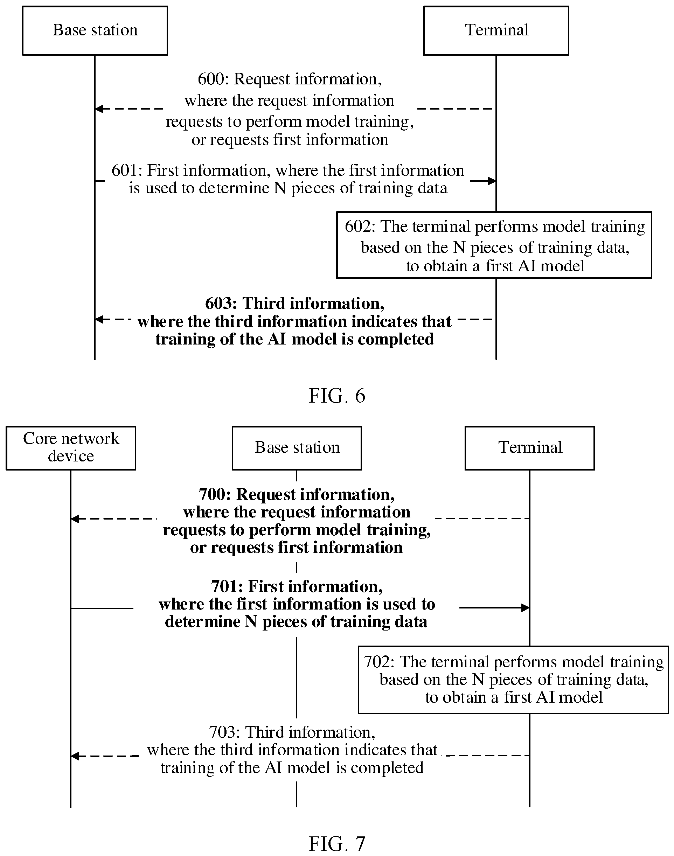

This application provides the communication method. In this method, the first device (for example, the base station) no longer sends the AI model to the second device (for example, the terminal), but sends the training data to the terminal. The terminal trains the AI model autonomously based on the training data provided by the base station. This may resolve various disadvantages caused by directly transmitting the AI model to the terminal by the base station. As shown in FIG. 6, this application provides a procedure of a communication method. The method includes at least the following steps.

Step 600: A terminal sends request information to a base station, where the request information requests to perform model training, or requests first information in the following step 601.

For example, when expecting to perform AI model training, the terminal may send the request information to the base station, to request the base station to configure training data for the terminal. The request information indicates at least one of the following:

- Application scenario of a to-be-trained AI model, that is, a specific application scenario of the to-be-trained AI model: For example, when the to-be-trained AI model is applied, at least one of a moving speed of the terminal, a location of the terminal (for example, whether the terminal is located at a cell edge or in a cell center), a multipath latency of a channel, or the like, may be referred to as the application scenario of the to-be-trained AI model. The terminal sends the foregoing application scenario to the base station. The base station may configure, based on the application scenario, training data that matches the foregoing application scenario for the terminal. Alternatively, a plurality of typical application scenarios may be predefined, and the terminal sends, to the base station, an identifier of a typical application scenario that most matches the application scenario of the to-be-trained AI model of the terminal.

- A function of the to-be-trained AI model may also be referred to as a purpose of the to-be-trained AI model. To be specific, the to-be-trained AI model is used to perform a specific operation. For example, the AI model is used for channel estimation, or used to predict a moving trail of the terminal. For example, when the terminal expects to train one AI model used for channel estimation, the terminal may send the request information to the base station, to request the base station to configure, for the terminal, training data used to train the AI model used for channel estimation. A request message may carry indication information of the channel estimation. Alternatively, functions of a plurality of AI models may be predefined, and the terminal sends, to the base station, an identifier of a function of a to-be-trained AI model of the terminal.

- Type of the training data: As described above, the to-be-trained AI models have different functions or usages. The AI models having the different functions or the usages may need different types of training data. For example, for the AI model used for channel estimation, a type of needed training data may be radio channel information. For the AI model used to predict the moving trail of the terminal, a type of needed training data may be the moving trail of the terminal and some information used to predict the moving trail of the terminal, for example, a received signal or a radio channel. The type of the training data specifically refers to as a specific type of needed training data when the terminal performs the model training. In this application, the request message may carry indication information of the type of the training data. Alternatively, a plurality of types of training data may be predefined, for example, the radio channel information, a radio channel characteristic, the received signal, received signal power, or terminal location information. The terminal sends, to the base station, an identifier of a type of training data needed by the terminal.

- Input format and/or output format of the to-be-trained AI model: In a design, the terminal includes indication information of the input format and/or the output format of the to-be-trained AI model in the request information, and sends the indication information to the base station. The base station determines, based on the input format of the to-be-trained AI model, a format of the training data configured for the terminal. In a case of supervised learning, the base station may determine a format of a training label based on the output format of the to-be-trained AI model. Alternatively, the request information may not carry the indication information of the input format and/or the output format of the to-be trained-AI model. The terminal may adjust, based on the input format of the to-be-trained AI model, the format of the training data configured by the base station, so that the two formats match. In the case of supervised learning, the terminal adjusts, based on the output format of the to-be-trained AI model, the format of the training label configured for the terminal by the base station, so that the two formats match. Alternatively, the terminal may determine the input format and/or the output format of the AI model autonomously. The terminal designs, based on the training data configured by the base station and/or the format of the training label, an AI model that matches the format. To be specific, an input format of the AI model designed by the terminal should match the format of the training data configured by the base station, and an output format of the AI model should match the format of the training label configured by the base station.

Optionally, the input format of the AI model may include a dimension of input data of the AI model and the like. The dimension of the input data refers to a specific expression form of the input data. The output format of the AI model may include a dimension of output data of the AI model and the like. The dimension of the output data refers to a specific expression form of the output data. For example, the dimension of the input data may be one or more of a time domain dimension, a frequency domain dimension, a space domain dimension, a beam domain dimension, and a latency domain dimension. The dimension of the input data may further include a size in each dimension. For example, when a size of the input data in the time domain dimension is 2, and a size of the input data in the frequency domain dimension is 72, the input data is a 2*72 matrix. The dimension of the input data or the output data may further include a unit in each dimension. For example, a unit in the time domain dimension may be a slot, an orthogonal frequency division multiplexing (orthogonal frequency division multiplexing, OFDM) symbol, or the like. A unit in the frequency domain dimension may be a subcarrier, a resource block (resource block, RB), or the like.

- Computing capability of the terminal: For example, the computing capability of the terminal is a scale of the AI model supported by the terminal, a quantity of input parameters of the AI model supported by the terminal, or a quantity of pieces of training data supported by the terminal. Alternatively, computing capabilities of a plurality of levels may be predefined, and the terminal sends, to the base station, an identifier of a level that matches the computing capability of the terminal. The base station may determine, based on the computing capability of the terminal, training data that matches the computing capability. For example, if a maximum of 100 pieces of training data is supported by the terminal, a quantity of pieces of training data configured by the base station for the terminal may be less than or equal to 100.

- Storage capability of the terminal: For example, the terminal may report a maximum capability or a current remaining capability of training data storage of the terminal to the base station. When configuring the training data for the terminal, the base station should consider the storage capability of the terminal. For example, a total quantity of pieces of training data configured by the base station for the terminal should be less than the maximum storage capability of the terminal.

Optionally, a transmission resource of the request information may be preconfigured, or dynamically requested by the terminal to the base station, or the like. This is not limited. For example, the request information is transmitted through a control channel (for example, a physical uplink control channel (physical uplink control channel, PUCCH)), or is transmitted through a data channel (for example, a physical uplink shared channel (physical uplink shared channel, PUSCH)), or is transmitted through a random access channel (random access channel, RACH), or is transmitted through a combination of the plurality of channels. For example, a part of the request information is transmitted through the PUCCH, and the other part of the request information is transmitted through the PUSCH. The request information may be one piece of information. For example, the information includes all content in the request information. Alternatively, the request information may be a plurality of pieces of information. For example, one of the plurality of pieces of information carries a part of content in the request information, and another one of the plurality of pieces of information carries remaining content in the request information.

In a design, after sending the request information, the terminal expects to receive, in T1 time units, the first information sent by the base station in the following step 601. If the terminal does not receive the first information in the T1 time units, the terminal performs the foregoing step 600 again, that is, requests the training data from the base station again.

Step 601: The base station sends the first information to the terminal, where the first information is used to determine N pieces of training data, and N is an integer.

In a design, the first information indicates at least one of the following:

- At least one training set:

In this application, the training set is a set of training data. Each piece of training data corresponds to one input in a model training process. The base station may directly send the at least one training set to the terminal. Alternatively, the base station may send indication information of the at least one training set to the terminal. The indication information may be an identifier of the at least one training set and the like. The terminal determines, based on the indication information of the at least one training set, the at least one training set from a plurality of predetermined training sets. For example, the training set may be stored in a training database. The training database may be located inside the base station, may be located inside the terminal device, or may be located on another node that is independent of the base station and the terminal. Data in the training database may be fixed, or is updatable. The base station may manage or maintain the training database. For example, the base station may add a new training set to the training database or delete or update the training set in the training database, or the base station may authorize the terminal to add a new training set to the training database. For example, the training database includes X training sets. The base station may indicate or authorize the terminal to access Y training sets in the training database, to train the AI model. The Y training sets are the at least one training set. Both X and Y are integers, and a value of Y is less than or equal to X. Optionally, for a supervised learning scenario or the like in which the training label is needed, the first information further includes the training label. The training label corresponds to one correct output in the model training process.

In this application, when obtaining the at least one training set, the terminal may directly use the at least one training set to perform model training. To be specific, the training data included in each of the at least one training set is used as the training data used for model training. For example, the base station indicates two training sets to the terminal. Each training set includes 100 pieces of training data. In this case, the terminal may perform model training by using the 100 pieces of training data in a training set 1 and the 100 pieces of training data in a training set 2. Alternatively, the terminal may perform model training by using a part of the training data in the training set. The foregoing example is still used. The terminal may use a part of the training data (for example, the first 50 pieces of training data) in the training set 1 and all the training data (for example, the foregoing 100 pieces of training data) in the training set 2. Optionally, a specific quantity of pieces of training data selected from each training set for model training and/or a manner of selecting the training data from the training set may be configured by the base station, may be specified in a protocol, or the like. This is not limited. In a design, the base station may further send at least one of the following indication information to the terminal:

- Quantity of pieces of training data included in the N pieces of training data in a first training set in the at least one training set, that is, quantity of pieces of training data used for model training in the first training set, where the first training set may be any one or more of the at least one training set:

In a design, the base station may indicate, to the terminal, the training data used for model training in each training set in the at least one training set. For example, the base station sends indication information of three training sets to the terminal, and each training set includes 600 pieces of training data. The base station may indicate the terminal to perform model training by using training data numbered 0 to training data numbered 50 in a training set 1, training data numbered 1 to training data numbered 51 in a training set 2, and training data numbered 3 to training data numbered 53 in a training set 3. Alternatively, the base station may indicate, to the terminal, only a quantity of pieces of training data used for model training in each of the at least one training set. How to select the quantity of pieces of training data from each training set is not limited. The foregoing example is still used. The base station sends the indication information of the three training sets to the terminal, and each training set includes the 600 pieces of training data. The base station may indicate the terminal device to select 50 pieces of training data from the training set 1. The terminal device may select the training data numbered 1 to the training data numbered 50 from the training set 1, or may select training data numbered 61 to training data numbered 110. Alternatively, the base station may indicate, to the terminal, only a quantity of pieces of training data used for model training in a part of the at least one training set. How to obtain training data from a remaining training set in the at least one training set is not limited. The foregoing example is still used. The base station sends the indication information of the three training sets to the terminal, and each training set includes the 600 pieces of training data. The base station may indicate the terminal to perform model training by using the training data numbered 0 to the training data numbered 50 in the training set 1, and no longer send corresponding indication information about the training set 2 and the training set 3. The terminal may perform model training by using the training data numbered 0 to the training data numbered 50 in the training set 1, and all the training data in the training set 2 and the training set 3.

- Value of N: N is a total quantity of pieces of training data used by the terminal to perform model training. For example, the value of N may be predefined in a protocol or may be notified by the base station to the terminal. This is not limited.
- Alternatively, the value of N may be a ratio of training data obtained from different training sets in the at least one training set. For example, the base station sends indication information of two training sets to the terminal, and indicates that a ratio of training data obtained from a training set 1 to training data obtained from a training set 2 is 2:1. In this case, the terminal may obtain the training data from each training set based on the total quantity N of pieces of training data and the ratio of the training data obtained from each training set. For example, when the value of N is 300, and the ratio of the training data obtained from the training set 1 to the training data obtained from the training set 2 is 2:1, the terminal may obtain 200 pieces of training data from the training set 1, and obtain 100 pieces of training data from the training set 2. A manner of how the terminal obtains the training data from the training set 1 and the training set 2 may be determined by the terminal. For example, the first 200 pieces of training data may be obtained from the training set 1, or the last 100 pieces of training data may be obtained, or 200 pieces of training data may be selected according to a rule. For example, the manner of selecting the training data from the training set may be configured by the base station for the terminal or may be predefined. This is not limited.

In this application, the indication information such as the quantity of training data included in the N pieces of training data in the first training set of the at least one training set, the value of N, or the ratio of the training data obtained from the different training sets in the at least one training set may be carried in the first information. Alternatively, the base station may separately send one piece of information to indicate the information. The information separately sent by the base station may be referred to as second information.

- Second AI model: A first AI model is obtained through training based on the second AI model, or the second AI model is used for training to obtain the first AI model.

In this application, the to-be-trained AI model is referred to as the first AI model, and there may be one or more first AI models. An initial AI model is referred to as the second AI model. In this application, the initial AI model (namely, the second AI model) may be trained by using the training data, to obtain the first AI model. In this application, the base station may include indication information of the second AI model in the first information. The terminal may determine the second AI model based on the indication information of the second AI model. For example, the indication information of the second AI model may be an identifier of the second AI model, and indicates the terminal to use the second AI model as the initial AI model. For another example, the indication information of the second AI model may be specific content of the second AI model, and indicates all or a part of structure and/or parameter information of the second AI model. For specific descriptions of the second AI model, refer to the following step 602.

- Input format and/or output format of the first AI model:

In this application, the base station may configure the input format, the output format, and/or the like of the to-be-trained first AI model for the terminal. The terminal designs the input format and/or the output format of the first AI model based on the configuration of the base station. For example, the first information may include indication information of the input format and/or the output format of the AI model (that is, the first AI model) to be trained by the terminal. The indication information indicates or suggests the terminal to design the AI model based on the input format and/or the output format.

It may be understood that if the indication information of the input format and/or the output format of the first AI model sent by the base station is an indication, the terminal needs to design the input format and/or the output format of the first AI model based on the indication. If the indication information of the input format and/or the output format of the first AI model sent by the base station is merely a suggestion, the terminal may determine the input format and/or the output format of the first AI model autonomously.

For example, in a channel state information (channel state information, CSI) feedback scenario, the base station needs to configure a CSI resource for measurement for the terminal, and the CSI resource is related to an input of a CSI compression model of the terminal. The base station may further configure an information size of a CSI report fed back by the terminal. The information size of the CSI report is related to an output of the CSI compression model of the terminal. In this case, the base station determines an input format and an output format of the CSI compression model based on the CSI-RS resource and the information size of the CSI report, and indicates the input format and the output format of the CSI compression model to the terminal. It may be understood that the CSI compression model is one type of AI model. The CSI compression model is specifically used to compress CSI.

- Performance requirement information of the first AI model:

In this application, the base station may configure the performance requirement information for the terminal to train the first AI model. For example, the first information may further include an indication of the performance requirement information of the base station for the first AI model trained by the terminal. The terminal may determine, based on the performance requirement information, an extent to which the first AI model can be trained until the training is ended. For example, the performance requirement information may be a threshold of a loss function, a threshold of a minimum mean square error (mean square error, MSE), a threshold of a normalized minimum mean square error (normalized mean square error, NMSE), a threshold of a block error rate (block error rate, BLER), or a threshold of a signal to interference and noise ratio (signal to interference and noise ratio, SINR). Alternatively, the performance requirement of the first AI model may be predefined, and the first information may not include the performance requirement information of the first AI model, or the like.

For example, the terminal may verify, by using a validation set, an output of the first AI model meets a requirement. This process may be referred to as model validation. The model validation generally occurs in the model training process. For example, each time the model is trained in one or more epochs (EPOCHs), the validation set may be used to verify the current model, to monitor a model training status, for example, a phenomenon such as underfitting, overfitting, or convergence; and determine whether to end the training. Optionally, in the model validation process, a hyperparameter of the model may be further adjusted. The hyperparameter may be a quantity of layers of a neural network, a quantity of neurons, an activation function, the loss function, or the like in the model.

In this application, in the supervised learning scenario, the terminal may compare the output of the first AI model in the validation set with a corresponding training label (where the training label may be considered as a correct output in the validation set), to determine an error between the output and the training label. Whether the training of the current AI model can be ended is determined based on the error between the output and the training label. For example, if a difference between the output and the training label is less than threshold information in the performance requirement, for example, the threshold of the MSE, the training of the first AI model can be ended. Otherwise, the first AI model needs to continue to be trained. In a case of unsupervised learning or reinforcement learning, there is no training label corresponding to the output of the AI model, and the terminal determines a performance metric of the AI model based on the output of the first AI model in the validation set, and determines, based on the performance metric of the AI model and the threshold information in the performance requirement information, whether the AI model meets the performance requirement, that is, whether the training of the AI model can be ended.

The first information in the foregoing step 601 may be one piece of information, and the one piece of information carries the indication information of the at least one training set, the second AI model, the input format and/or the output format of the first AI model, the performance requirement information of the first AI model, or the like. Alternatively, the first information in the foregoing step 601 may be a plurality of pieces of information. One of the plurality of pieces of information carries a part of information in the indication information, and another one of the plurality of pieces of information carries remaining information in the indication information.

In another design, the first information in the foregoing step 601 is a reference signal. The terminal may determine the N pieces of training data based on the reference signal. Alternatively, the first information includes configuration information of the reference signal. The terminal receives the reference signal based on the configuration information, and determines the N pieces of training data based on the reference signal, and the like.

Optionally, the base station may send a corresponding reference signal to the terminal based on a function of the to-be-trained first AI model. In other words, when functions of the first AI model are different, reference signals that are sent by the base station to the terminal and that are used to generate the N pieces of training data may be different. For example, in a channel estimation or prediction scenario, that is, when the first AI model is used for channel estimation or prediction, a reference signal sent by the base station to the terminal may be a demodulation reference signal (demodulation reference signal, DMRS) or a channel state information reference signal (channel state information reference signal, CSI-RS). The terminal determines the N pieces of training data based on the DMRS, the CSI-RS, or the like, and performs model training based on the N pieces of training data, to determine the first AI model used for channel estimation or prediction. This may be referred to as the channel estimation or prediction scenario, and the reference signal used to generate the N pieces of training data is the DMRS, the CSI-RS, or the like. Alternatively, in the CSI feedback scenario, the reference signal used to generate the N pieces of training data is the CSI-RS. Alternatively, in a positioning or line-of-sight identification scenario, the reference signal used to generate the N pieces of training data is a positioning reference signal (positioning reference signal, PRS). In a beam management or prediction scenario, the reference signal used to generate the N pieces of training data is a synchronization signal/physical layer broadcast channel block (synchronization signal/physical broadcast channel block, SSB) or the CSI-RS. Alternatively, in a receiver enhancement or decoder enhancement scenario, a channel that carries data or control information is used to generate the N pieces of training data, for example, a physical downlink data channel (physical downlink shared channel, PDSCH), a physical downlink control channel (physical downlink control channel, PDCCH), or a physical broadcast channel (physical broadcast channel, PBCH).

In this application, the base station may configure a plurality of types of different reference signals for the terminal, for example, configure different periodicities, time domain patterns, frequency domain patterns, space domain patterns, or bandwidths, to generate different types of data. For example, for a same reference signal, the base station may configure three different types of such reference signals for the terminal, and different types of reference signals have different configurations of at least one of a time domain pattern, a frequency domain pattern, a space domain pattern, a bandwidth, or the like. For example, a first-type reference signal is used for normal model inference. A second-type reference signal is used to generate the training data, that is, used for model training. A third-type reference signal is used to generate test data, and is used for model testing, validation, or the like. Optionally, for a reference signal of a same purpose, a plurality of different reference signals may be further configured in different scenarios. For example, for the reference signal used for model training, reference signals configured in a single-terminal scenario and a multi-terminal scenario may be different. Reference signals configured in a low-speed moving scenario and a high-speed moving scenario may also be different.

Channel estimation is used as an example. The base station may configure a plurality of DMRSs for the terminal. A first-type DMRS is used for model inference or is normally used. For example, the DMRS is configured as a normal DMRS for demodulation. For example, the DMRS may be specifically a dual front loaded-symbol and type 2 DMRS. A second-type DMRS is used to generate the training data. For example, the DMRS may be specifically configured as a DMRS encrypted in time domain and/or frequency domain. In this way, the DMRS may be used to obtain accurate channel information by using a conventional channel estimation algorithm, to generate the training data. A third-type DMRS is used to generate the test data for model testing or validation. The DMRS may also be configured as a DMRS encrypted in time domain and/or frequency domain. In this way, the DMRS may be used to obtain accurate channel information by using a conventional channel estimation algorithm or another AI model, to test or verify performance of the AI model obtained through the training by using the foregoing training data.

In this application, at a same moment, only one configuration of the DMRS may be in an active state, that is, the base station sends the only one configuration of the DMRS to the terminal. Alternatively, a plurality of configurations of the DMRS may be in an active state, that is, the base station may simultaneously send the plurality of configurations of the DMRS to the terminal. For example, a normally configured DMRS is sent only when the PDSCH is sent, and the DMRS used for model training may be sent periodically. In addition, to increase a training speed, a small periodicity may be configured for the DMRS. The DMRS for model validation and testing may be periodically sent after the model training is completed, and a large periodicity may be configured for the DMRS, to reduce overheads.

Step 602: The terminal performs model training based on the N pieces of training data, to obtain the first AI model.

In this application, the terminal may perform model training on the initial AI model (namely, the second AI model) by using the N pieces of training data, to obtain the first AI model. It may be understood that the first information may indicate the performance requirement information of the AI model. When the trained AI model meets the performance requirement, the terminal may end the training of the AI model. Optionally, if the base station configures the input format, the output format, and/or the like of the AI model in the first information, the trained first AI model should conform to configuration of the base station.

The initial AI model, namely, the second AI model, may be indicated by the base station. For example, the first information in step 601 may indicate the second AI model. For example, the base station may indicate the terminal to use one AI model in the previously trained AI models as the initial AI model. This manner is applicable to a case in which an application scenario of the AI model changes, and a new scenario is similar to a previously experienced scenario. In this case, the base station may indicate the terminal to use an AI model corresponding to the scenario as an initial model, to accelerate a training process. For another example, the base station may indicate the terminal to retrain the AI model, that is, perform training by using a random initial AI model.

Alternatively, the initial AI model may be determined by the terminal. For example, if an AI model is built in the terminal at delivery, the terminal may use this AI model as an initial AI model. Alternatively, the terminal may perform training by using a random initial AI model. Alternatively, the terminal may use a previously trained AI model as an initial AI model.

Alternatively, a structure of the second AI model is indicated by the base station. For example, a structure of the AI model includes one or more of a quantity of layers of the AI model, an operation type of each layer, and a quantity of neurons of each layer. A parameter of the second AI model is initialized by the terminal.

The terminal may obtain one or more AI models through the training by using the foregoing N pieces of training data, that is, there is one or more first AI models. In an extreme case, when the value of N is 1, the terminal may perform model training by using one piece of training data, to obtain one or more AI models. When the value of N is another integer greater than 1, in a design, the terminal may perform model training by using the N pieces of training data, to obtain one or more AI models. It may be understood that, in the model training process, the initial model is trained by using the training data, to obtain the AI model. A specific trained AI model is related to at least two factors such as the training data and the initial model. Therefore, a case in which different AI models are trained by using same training data may occur. For example, the terminal may train an initial model 1 by using the N pieces of training data, to obtain an AI model 1, and train an initial model 2 by using the N pieces of training data, to obtain an AI model 2. Alternatively, in another design, the terminal may perform model training by using N1 pieces of training data in the N pieces of training data, to obtain an AI model 1, and perform model training by using N2 pieces of training data in the N pieces of training data, to obtain an AI model 2. The rest can be deduced by analogy. The terminal may perform model training by using Nn pieces of training data in the N pieces of training data, to obtain an AI model n. The N1 pieces of training data, the N2 pieces of training data, ..., and the Nn pieces of training data are all subsets of the N pieces of training data, and may have an intersection with each other, or may not overlap with each other at all. A correspondence between the training data and the AI model may be indicated by the base station. For example, when there are a plurality of pieces of training data and a plurality of first AI models, the first information in the foregoing step 601 may further indicate a correspondence between the plurality of pieces of training data and the plurality of first AI models.

Alternatively, the training set is a set of training data. It can be learned from the foregoing descriptions that the base station may specifically indicate the at least one training set to the terminal. The terminal obtains the N pieces of training data based on the at least one training set. The at least one training set is one or more training sets. When there is one training set, the terminal may perform model training by using the one training set, to obtain one or more AI models. Alternatively, when there are a plurality of training sets, for example, Y represents the plurality of training sets, the terminal may perform model training by using Y1 training sets, to obtain an AI model 1, and perform model training by using Y2 training sets, to obtain an AI model 2. The rest can be deduced by analogy. The terminal may perform model training by using Yn training sets, to obtain an AI model n. The Y1 training sets, the Y2 training sets, and the Yn training sets are all subsets of the Y training sets, and may have an intersection with each other, or may not overlap with each other at all. Similarly, a correspondence between the training set and the AI model may be indicated by the base station. For example, when there are a plurality of training sets and a plurality of to-be trained first AI models, the first information further indicates a correspondence between the plurality of training sets and the plurality of first AI models.

Step 603: When completing the training of the first AI model, the terminal sends third information to the base station, where the third information may indicate that the training of the first AI model is completed, and the third information may be referred to as training completion information.

In a design, the third information indicates at least one of the following:

- Identifier of the first AI model: The identifier of the first AI model may be an index or a number of the first AI model, or another identifier that may uniquely identify the first AI model. The terminal reports an identifier of the trained AI model to the base station, so that the base station may uniformly manage the trained AI model in the terminal. For example, the terminal trains the AI model 1 by using a training set a, and trains the AI model 2 by using a training set b. The AI model 1 and the AI model 2 implement a same function, for example, both are used to predict a moving trail of the terminal. When needing the terminal to predict the moving trail of the terminal, the base station may determine which one of the AI model 1 and the AI model 2 better matches a current application scenario of the terminal, to indicate one AI model to the terminal for trail prediction. In this application, the identifier of the first AI model may be allocated by the terminal to the first AI model, or may be allocated by the base station to the first AI model. Optionally, if the identifier of the first AI model is allocated by the base station, the terminal may no longer report the identifier of the trained first AI model to the base station, that is, the third information in step 603 may no longer include identification information of the first AI model. For example, in an implementation, the request information in step 600 may carry identification information of the AI model to be trained by the terminal. When the base station receives the training completion information in the foregoing step 603, even if the training completion information, that is, the third information, does not carry the identification information of the first AI model, the base station may determine that the current AI model on which the training is completed is the AI model on which the training is originally requested.

If the terminal allocates an identifier to the AI model, and completes the training on the AI model, the terminal reports the identifier of the trained AI model to the base station. In this case, when specifically storing the trained AI model, the base station may identify the AI model in two dimensions, that is, an identifier of the terminal and the identifier of the AI model. For example, the base station may specifically store: a terminal 1: an AI model 1, an AI model 2, ..., and an AI model n; a terminal 2: an AI model 1, an AI model 2, ..., and an AI model m. Alternatively, to uniformly manage the AI models, the base station may uniformly renumber trained AI models reported by different terminals. In this case, each AI model may have two numbers. One number is allocated by the base station, and uniquely identifies one AI model on a base station side; and the other number is allocated by the terminal, and uniquely identifies one AI model on a terminal side.

- Performance information of the first AI model, for example, a loss function of the first AI model, or an MSE value, an NMSE value, a BLER value, or an SINR value of the AI model in a testing set: In an implementation, after completing the model training, the terminal may test the trained AI model by using the test set. For example, a generalization capability of the AI model is evaluated, whether the performance of the AI model meets a requirement is determined, or whether the AI model is available is determined. This process may be referred to as a model testing process. For example, in the case of supervised learning, the terminal may compare an output of the first AI model under the test with a corresponding training label, and determine an error between the output and the training label. The error may be represented by an MSE value, an NMSE value, a BLER value, or the like. Alternatively, for example, the output of the first AI model is a beamforming vector or a precoding matrix, and the terminal may calculate an SINR corresponding to the beamforming vector or the precoding matrix that is output by the first AI model in the test set. For example, if the output of the first AI model in the test set is a precoding matrix W, the terminal calculates received power at a receiving end after a signal sent by using power P and the precoding matrix W passes through a channel H, and calculates the SINR based on the received power and noise power at the receiving end.

In this application, when deleting or updating a local AI module, the terminal may notify the base station of AI models that are deleted or AI models that are updated, performance of the updated AI models, and the like.

In this application, the base station configures content such as the training data of the AI model, the performance requirement, or the input format and the output format of the AI model for the terminal. The terminal may train the AI model autonomously, and the base station does not need to directly configure the AI model for UE. This reduces network overheads to some extent. In addition, the base station can control and perceive the AI model of the terminal to some extent.

Step 600 and step 603 in the foregoing procedure shown in FIG. 6 are optional and is not mandatory, and are represented by dashed lines in FIG. 6. For example, the procedure shown in FIG. 6 may be initiated by the terminal. The terminal sends a request message to the base station to request the training data. The foregoing step 600 needs to be performed. Alternatively, the procedure may be initiated by the base station, and the base station actively configures the training data for the terminal. In other words, the base station may directly perform the foregoing step 601 to send the first information to the terminal, and the foregoing step 600 does not need to be performed. For example, in the procedure shown in FIG. 6, after completing the training on the AI model, the terminal may no longer report the AI model to the base station, and the foregoing step 603 does not need to be performed. Alternatively, after completing the training on the AI model, the terminal needs to report the AI model to the base station, and the foregoing step 603 needs to be performed.

In this application, the request information, the first information, the third information, or the like may indicate at least one piece of information. It may be understood that the request information, the first information, or the third information may explicitly indicate corresponding information. For example, the first information may explicitly indicate at least one training set, the second AI model, the input format and/or the output format of the first AI model, or the performance requirement information of the first AI model. In the explicit indication manner, corresponding information may be directly carried. For example, the first information directly carries the at least one training set. Alternatively, an identifier of the foregoing corresponding information may be carried. For example, the first information may carry identification information of the at least one training set. Alternatively, the request information, the first information, or the third information may implicitly indicate corresponding information, and the implicit indication may be an implicit indication performed in one or more of a scrambling manner, a manner using a reference signal sequence, a manner using a resource location, or the like. For example, the base station may configure the plurality of training sets for the terminal, and the base station may indicate, by scrambling the at least one training set for model training in a specific manner, the terminal to perform model training on at least one test set scrambled in a specific manner.

In the foregoing procedure shown in FIG. 6, an example in which the base station configures related information used to train the AI model for the terminal is used for description. This application is not limited. In addition to the base station, another device, for example, the core network device, the OAM, remote intelligent communication, an intelligent wireless controller, or an AI node, may also configure, for the terminal, the related information used to train the AI model, and the base station specifically achieves only an information forwarding function. For example, an example in which the core network device configures, for the terminal, the related information used to train the AI model. As shown in FIG. 7, a procedure of a communication method is provided. The method includes at least the following steps.

Step 700: A terminal sends request message to a core network device, where the request message requests to perform training on an AI model, or requests first information in the following step 701.

Similar to step 600 in FIG. 6, step 700 is optional and does not need to be performed, and is represented by dashed lines in FIG. 7. For example, a base station may receive the request message from the terminal, and forward the request information to the core network device.

Step 701: The core network device sends the first information to the terminal, where the first information is used to determine N pieces of training data.

For example, the base station receives the first information from the core network device, and forwards the first information to the terminal.

Step 702: The terminal performs model training based on the N pieces of training data, to determine the first AI model.

Step 703: The terminal sends third information to the core network device, where the third information indicates that the training of the AI model is completed.

Similar to step 603 in FIG. 6, step 703 is optional and does not need to be performed, and is represented by dashed lines in FIG. 7. For example, the base station may receive the third information, and forward the third information to the core network device.

It may be understood that, to implement the functions in the foregoing methods, the base station and the terminal include corresponding hardware structures and/or software modules for performing the functions. A person skilled in the art should be easily aware that, in combination with units and method steps in the examples described in this application, this application can be implemented by using hardware or a combination of hardware and computer software. Whether a function is performed by hardware or hardware driven by computer software depends on particular application scenarios and design constraint conditions of the technical solutions.

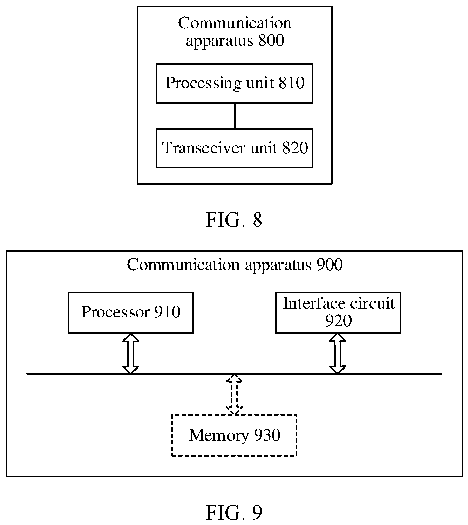

FIG. 8 and FIG. 9 each are a schematic diagram of a structure of a possible communication apparatus according to this application. These communication apparatuses may be configured to implement a function of the terminal or the base station in the foregoing methods, and therefore can also implement beneficial effects of the foregoing methods. In this application, the communication apparatus may be one of the terminals 120a to 120j shown in FIG. 1, or may be the base station 110a or 110b shown in FIG. 1, or may be a module (such as a chip) used in a terminal or a base station.

As shown in FIG. 8, a communication apparatus 800 includes a processing unit 810 and a transceiver unit 820. The communication apparatus 800 is configured to implement a function of the terminal or the base station in the method shown in FIG. 6 or FIG. 7.

When the communication apparatus 800 is configured to implement the function of the terminal in the method shown in FIG. 6 or FIG. 7, the transceiver unit 820 is configured to receive first information from a base station. The processing unit 810 is configured to perform model training based on N pieces of training data, to obtain a first AI model.

When the communication apparatus 800 is configured to implement the function of the base station in the method shown in FIG. 6 or FIG. 7, the processing unit 810 is configured to determine the first information. The transceiver unit 820 is configured to send the first information to the terminal.

For more detailed descriptions of the processing unit 810 and the transceiver unit 820, directly refer to related descriptions in the method shown in FIG. 6 or FIG. 7. Details are not described herein again.

As shown in FIG. 9, a communication apparatus 900 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to store instructions executed by the processor 910, store input data needed by the processor 910 to run the instructions, or store data generated after the processor 910 runs the instructions.

When the communication apparatus 900 is configured to implement the method, the processor 910 is configured to implement a function of the processing unit 810, and the interface circuit 920 is configured to implement a function of the transceiver unit 820.

When the foregoing communication apparatus is a chip used in the terminal, the chip in the terminal implements functions of the terminal in the foregoing method. The chip in the terminal receives information from another module (for example, a radio frequency module or an antenna) in the terminal, where the information is sent by the base station to the terminal, or the chip in the terminal sends information to another module (for example, a radio frequency module or an antenna) in the terminal, where the information is sent by the terminal to the base station.

When the communication apparatus is a module used in the base station, a base station module implements the function of the base station in the foregoing method. The base station module receives information from another module (for example, a radio frequency module or an antenna) in the base station, where the information is sent by the terminal to the base station, or the base station module sends information to another module (for example, a radio frequency module or an antenna) in the base station, where the information is sent by the base station to the terminal. The base station module herein may be a baseband chip of the base station, or may be a DU or another module. The DU herein may be a DU in an open radio access network (open radio access network, O-RAN) architecture.

It may be understood that, the processor in this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. The general-purpose processor may be a microprocessor, or may be any conventional processor.

The memory in this application may be a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art.

For example, a storage medium is coupled to a processor, so that the processor can read information from the storage medium or write information into the storage medium. The storage medium may be a component of the processor. The processor and the storage medium may be located in the ASIC. In addition, the ASIC may be located in a base station or the terminal. Certainly, the processor and the storage medium may alternatively exist in the base station or the terminal as discrete components.

All or some of the methods in this application may be implemented by software, hardware, firmware, or any combination thereof. When the software is used to implement embodiments, all or a part of embodiments may be implemented in a form of a computer program product. The computer program product includes one or more computer programs or instructions. When the computer programs or the instructions are loaded and performed on a computer, all or some of the procedures or functions in this application are performed. The computer may be a general-purpose computer, a dedicated computer, a computer network, a network device, user equipment, a core network device, OAM, or another programmable apparatus. The computer program or instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape, or may be an optical medium, for example, a digital video disc, or may be a semiconductor medium, for example, a solid-state disk. The computer-readable storage medium may be a volatile or nonvolatile storage medium, or may include two types of storage media: a volatile storage medium and a non-volatile storage medium.

In this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects and indicates that three relationships may exist. For example, A and/or B may indicate the following three cases: Only A exists, both A and B exist, and only B exists. A and B each may be singular or plural. In the text description of this application, the character "/" generally indicates that the associated objects are in an "or" relationship. In the formula of this application, the character "/" indicates that the associated objects are in a "division" relationship. "Including at least one of A, B, or C" may indicate: including A; including B; including C; including A and B; including A and C; including B and C; and including A, B, and C.

It may be understood that various numerals used in this application are merely differentiated for ease of description, but are not used to limit the scope of this application. The sequence numbers of the foregoing processes do not mean execution sequences, and the execution sequences of the processes should be determined based on functions and internal logic of the processes.

**Claims**

1. A communication method, comprising:

   receiving first information from a network device, wherein the first information is used to determine N pieces of training data, and N is an integer; and performing model training based on the N pieces of training data, to obtain a first artificial intelligence AI model.

2. The method according to claim 1, wherein the first information indicates at least one of the following:

   at least one training set, wherein each training set comprises at least one piece of training data; a second AI model, wherein the first AI model is obtained through training based on the second AI model; an input format and/or an output format of the first AI model; or performance requirement information of the first AI model.

3. The method according to claim 2, further comprising: receiving second information from the network device, wherein the second information indicates at least one of the following:

   training data comprised in the N pieces of training data in a first training set in the at least one training set; a value of N; or a ratio of training data obtained from different training sets in the at least one training set.

4. The method according to claim 2 or 3, wherein when there are a plurality of training sets and a plurality of first AI models, the first information further indicates a correspondence between the plurality of training sets and the plurality of first AI models.

5. The method according to claim 1, wherein the first information is a reference signal, and the method further comprises: determining the N pieces of training data based on the reference signal.

6. The method according to any one of claims 1 to 5, further comprising: sending request information to the network device, wherein the request information requests the first information, or requests to perform model training, and the request information indicates at least one of the following:

   an application scenario of the first AI model; a function of the first AI model; a type of the training data; the input format and/or the output format of the first AI model; a computing capability of a terminal; or a storage capability of the terminal.

7. The method according to any one of claims 1 to 6, further comprising: sending third information to the network device after the training of the first AI model is completed, wherein the third information indicates at least one of the following:

   an identifier of the first AI model; or performance of the first AI model.

8. A communication method, comprising:

   determining first information; and sending the first information to a terminal, wherein the first information is used to determine N pieces of training data that are used to train a first artificial intelligence AI model, and N is an integer.

9. The method according to claim 8, wherein the first information indicates at least one of the following:

   at least one training set, wherein each training set comprises at least one piece of training data; a second AI model, wherein the second AI model is used for training to obtain the first AI model; an input format and/or an output format of the first AI model; or performance requirement information of the first AI model.

10. The method according to claim 9, further comprising: sending second information to the terminal, wherein the second information indicates at least one of the following:

    training data comprised in the N pieces of training data in a first training set in the at least one training set; a value of N; or a ratio of training data obtained from different training sets in the at least one training set.

11. The method according to claim 9 or 10, wherein when there are a plurality of training sets and a plurality of first AI models, the first information further indicates a correspondence between the plurality of training sets and the plurality of first AI models.

**12.** The method according to claim 8, wherein the first information is a reference signal that is used to determine the training data.

**13.** The method according to any one of claims 8 to 12, further comprising:
receiving request information from the terminal, wherein the request information requests the first information, or requests to perform model training, and the request information indicates at least one of the following:

an application scenario of the first AI model;
a function of the first AI model;
a type of the training data;
the input format and/or the output format of the first AI model;
a computing capability of the terminal; or
a storage capability of the terminal.

**14.** The method according to any one of claims 8 to 13, further comprising:
receiving third information from the terminal, wherein the third information indicates at least one of the following:

an identifier of the first AI model; or
performance of the first AI model.

**15.** A communication apparatus, comprising a unit configured to implement the method according to any one of claims 1 to 7.

**16.** A communication apparatus, comprising a processor and a memory, wherein the processor is coupled to the memory, and the processor is configured to implement the method according to any one of claims 1 to 7.

**17.** A communication apparatus, comprising a unit configured to implement the method according to any one of claims 8 to 14.

**18.** A communication apparatus, comprising a processor and a memory, wherein the processor is coupled to the memory, and the processor is configured to implement the method according to any one of claims 8 to 14.

**19.** A communication system, comprising the communication apparatus according to claim 15 or 16 and the communication apparatus according to claim 17 or 18.

**20.** A computer-readable storage medium, wherein the computer-readable storage medium stores instructions, and when the instructions are run on a computer, the computer is enabled to perform the method according to any one of claims 1 to 7, or the method according to any one of claims 8 to 14.

**21.** A computer program product, comprising instructions, wherein when the instructions are run on a computer, the computer is enabled to perform the method according to any one of claims 1 to 7, or the method according to any one of claims 8 to 14.

**22.** A chip system, comprising a processor, configured to implement the method according to any one of claims 1 to 7, or the method according to any one of claims 8 to 14, wherein the chip system comprises a chip, or comprises a chip and another discrete component.

FIG. 1

FIG. 2

FIG. 3

FIG. 4

FIG. 5a

FIG. 5b

```
┌──────────────┐                                    ┌──────────────┐
│ Base station │                                    │   Terminal   │
└──────┬───────┘                                    └──────┬───────┘
       │         600: Request information,                 │
       │◄─ ─ ─ where the request information ─ ─ ─ ─ ─ ─ ─ │
       │        requests to perform model training,        │
       │            or requests first information          │
       │                                                   │
       │  601: First information, where the first information │
       │─    is used to determine N pieces of training data─►│
       │                                                   │
       │                        ┌──────────────────────────┴─────────┐
       │                        │ 602: The terminal performs model training │
       │                        │  based on the N pieces of training data,   │
       │                        │       to obtain a first AI model          │
       │                        └──────────────────────────┬─────────┘
       │              603: Third information,               │
       │◄─ ─ ─ where the third information indicates that ─ ─ ─│
       │          training of the AI model is completed     │
       │                                                   │
```

FIG. 6

```
┌──────────────┐          ┌──────────────┐          ┌──────────────┐
│ Core network │          │ Base station │          │   Terminal   │
│    device    │          └──────┬───────┘          └──────┬───────┘
└──────┬───────┘                 │                         │
       │       700: Request information,                   │
       │◄─ ─ ─ ─ where the request information ─ ─ ─ ─ ─ ─ ─│
       │      requests to perform model training,          │
       │          or requests first information            │
       │                        │                          │
       │            701: First information,                │
       │        where the first information is used to      │
       │──────── determine N pieces of training data ─────►│
       │                        │                          │
       │                        │        ┌─────────────────┴────────────┐
       │                        │        │ 702: The terminal performs model training │
       │                        │        │  based on the N pieces of training data,   │
       │                        │        │       to obtain a first AI model          │
       │                        │        └─────────────────┬────────────┘
       │           703: Third information,                 │
       │◄─ ─ ─ where the third information indicates that ─ ─│
       │          training of the AI model is completed     │
       │                        │                          │
```

FIG. 7

Communication
apparatus 800

Processing unit 810

Transceiver unit 820

FIG. 8

Communication apparatus 900

Processor 910

Interface circuit
920

Memory 930

FIG. 9

## INTERNATIONAL SEARCH REPORT

| International application No. |
| --- |
| **PCT/CN2022/117930** |

| A. | CLASSIFICATION OF SUBJECT MATTER |
| --- | --- |

H04W 24/02(2009.01)i

According to International Patent Classification (IPC) or to both national classification and IPC

| B. | FIELDS SEARCHED |
| --- | --- |

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT; VEN; CNKI; 3GPP; ENTXTC: 训练数据, 训练参数, 模型, 网络侧, 网络设备, 接入网, 核心网, 基站, AI/ML, training data, model, OAM

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2021142627 A1 (GUANGDONG OPPO MOBILE TELECOMMUNICATIONS CORP., LTD.) 22 July 2021 (2021-07-22)<br>description, page 4, line 23-page 8, line 36 | 1-22 |
| A | CN 112005565 A (BEIJING XIAOMI MOBILE SOFTWARE CO., LTD.) 27 November 2020 (2020-11-27)<br>entire document | 1-22 |
| A | WO 2021142609 A1 (GUANGDONG OPPO MOBILE TELECOMMUNICATIONS CORP., LTD.) 22 July 2021 (2021-07-22)<br>entire document | 1-22 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 November 2022** | **30 November 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/117930**

| Patent document cited in search report | | | Publication date (day/month/year) | Patent family member(s) | Publication date (day/month/year) |
|---|---|---|---|---|---|
| WO | 2021142627 | A1 | 22 July 2021 | None | |
| CN | 112005565 | A | 27 November 2020 | None | |
| WO | 2021142609 | A1 | 22 July 2021 | None | |

Form PCT/ISA/210 (patent family annex) (January 2015)

**REFERENCES CITED IN THE DESCRIPTION**

**Patent documents cited in the description**

• CN 202111063199